# EUROPÄISCHE PATENTSCHRIFT

(11) **EP 2 258 618 B1**
(45) Veröffentlichungstag und Bekanntmachung des Hinweises auf die Patenterteilung: **28.08.2013**
(21) Anmeldenummer: 10005751.2
(22) Anmeldetag: 02.06.2010
(51) Int. Cl.: B65B 9/13, B65G 57/06, B65B 35/50, B65B 35/40, B65G 57/10

(54) **Vorrichtung und Verfahren zum Herstellen einer Verpackungseinheit**
Method and device for manufacturing a packaging unit
Dispositif et procédé destinés à la fabrication d'une unité d'emballage

(30) Priorität: 05.06.2009 DE 102009024002
(43) Veröffentlichungstag der Anmeldung: 08.12.2010
(73) Patentinhaber: Maschinenfabrik Möllers GmbH, 59269 Beckum (DE)
(72) Erfinder: Dietrich, Norbert, 53773 Hennef (DE)
(74) Vertreter: Grünecker, Kinkeldey, Stockmair & Schwanhäusser

(56) Entgegenhaltungen:
- EP-A1- 1 013 549
- EP-A2- 0 849 175
- DE-A1- 3 832 557
- DE-A1- 3 834 535
- DE-A1- 4 032 228
- US-A- 5 701 722

## Beschreibung

Die vorliegende Erfindung betrifft eine Vorrichtung zum Herstellen einer Verpackungseinheit, die mehrere zu einem Gutstapel gestapelte Verpackungsgegenstände umfasst. Die Vorrichtung hat eine Einrichtung zum Umhüllen des Gutstapels umfassend eine Reffeinrichtung zum Aufreffen und Überziehen einer Schlauchhaube über den Gutstapel.

Eine vorbekannte Vorrichtung zum Herstellen einer solchen Verpackungseinheit ist beispielsweise aus der auf die Anmelderin zurückgehenden EP 1 013 549 A1 bekannt. Eine ähnliche Vorrichtung ist auch aus DE 40 32 228 bekannt.

Bei der gattungsgemäßen Vorrichtung umfasst die Einrichtung zum Umhüllen des Gutstapels üblicherweise ein Gestell, unter dem der Gutstapel auf einer Fahrstrecke angeordnet wird und welches oberhalb des Gutstapels Zuführ-, Trenn- und Schweißeinrichtungen aufweist, um eine üblicherweise seitlich an dem Gestell als Rolle gehaltene Endlosbahn des zum Umhüllen des Gutstapels verwendeten Folienmaterials auf Länge zu schneiden und oberseitig mit einer Schweißnaht zu versehen. Die so gebildete Schlauchhaube wird ebenfalls im oberen Bereich des Gestells über Transportbänder so aufgespannt, dass Refffinger der Reffeinrichtung von unten in die unterseitig offene Haube eingreifen und das offene Ende der Haube fassen können.

Neben Refffingern weist die Reffeinrichtung üblicherweise Reffrollen auf, die mit einer durch die Refffinger gebildeten Gegenfläche zusammenwirken und zwischen dieser und sich das Folienmaterial klemmen können, um zum Einen vor dem Überziehen des Gutstapels mit der Schlauchhaube diese faltenbalgartig auf die Refffinger aufzureffen. Beim Überziehen der Schlauchhaube über den Gutstapel können die Reffrollen von dem Folienmaterial beabstandet sein, so dass sich das Folienmaterial beim Überziehen über den Gutstapel selbsttätig von den Refffingern abzieht. Die Reffrollen können aber auch eingesetzt werden, um beim Überziehen des Gutstapels einen erheblichen Widerstand aufzubauen, so dass die zwischen Refffingern und Reffrollen geklemmte Schlauchfolie mit erheblicher Längsdehnung an den Gutstapel angelegt wird. Denkbar ist beispielsweise das Bremsen oder gegenläufige Antreiben der Rollen beim Überziehen über den Gutstapel. Auch können die Reffrollen in einer Weise angetrieben werden, dass bewusst Schlauchmaterial an einer vorbestimmten Stelle oder einem vorbestimmten Bereich im Rahmen des Überziehens dem Gutstapel zugeführt wird.

Vor dem Überziehen des Gutstapels wird dieser durch Stapeln verschiedener Packungsgegenstände gebildet. Zwar können die Gutstapel unterschiedliche Verpackungsgegenstände umfassen. Häufig werden aber gattungsgemäße Verpackungseinheiten, insbesondere in der Zement- oder Kunststoffindustrie erstellt und aus jeweils identischen Gegenständen gebildet. Bei diesen handelt es sich dann häufig um Säcke aus Schüttgut.

Es ist bekannt, entsprechend der Verpackungseinheiten, durch automatisiertes Stapeln der einzelnen Lagen umfassend mehrere Verpackungsgegenstände auszubilden.

Der vorliegenden Erfindung liegt das Problem zugrunde, eine Vorrichtung und ein Verfahren anzugeben, mit denen Verpackungseinheiten wirtschaftlich hergestellt werden können.

Zur Lösung des vorrichtungsmäßigen Problems wird mit der vorliegenden Erfindung die eingangs genannte Vorrichtung durch einen Rahmen weitergebildet, der nicht nur die Reffeinrichtung hält, sondern der darüber hinaus wenigstens einen beweglichen Ladeschieber hat, der innerhalb des Rahmens eine Ablagefläche für Verpackungsgegenstände schaffen kann und der in eine Position seitlich neben den Gutstapel bringbar ist. So können von dem Rahmen gehaltene Verpackungsgegenstände als Stapellage auf den noch nicht fertiggestellten Gutstapel abgelegt werden.

Die vorliegende Erfindung will daher eine Einheit aus Palettierautomat zum Herstellen des Gutstapels und Umhüllungsautomat zum Umhüllen des Gutstapels mit Folienmaterial angeben. Während indes im Stand der Technik zunächst der Gutstapel gestapelt und dann in einer separaten Umhüllungsstation mit Folienmaterial umhüllt wird, ist es mit der vorliegenden Erfindung möglich, beide Verfahrensschritte beim Herstellen der Verpackungseinheit an einer einzigen Position durchzuführen.

Der Rahmen der erfindungsgemäßen Vorrichtung ist in vertikaler Richtung beweglich, um beispielsweise an einer ersten Position zu stapelnde Verpackungsgegenstände in einer Lage aufzunehmen. Diese Stapellage an Verpackungsgegenständen kommt auf der Ablagefläche zum Liegen. Eine Einrichtung zum Ausrichten der einzelnen Verpackungsgegenstände innerhalb der Stapellage kann vorgeschaltet sein.

Die so auf der Ablagefläche gebildete Stapellage wird durch vertikale Bewegung des Rahmens im Falle der ersten Lage des Gutstapels beispielsweise unmittelbar oberhalb einer Palette angeordnet. Der wenigstens eine Ladeschieber fährt danach aus dem Rahmen heraus, so dass die Verpackungsgegenstände der Stapellage nach unten aus dem Rahmen abfallen, bei dem besagten Ausführungsbeispiel zunächst auf die Palette.

Der Rahmen fährt dann in eine andere Position, um weitere Verpackungsgegenstände zu einer zweiten Stapellage aufzunehmen. Diese Stapellage wird auf die zunächst gebildete erste Stapellage abgelegt, nachdem der Rahmen mit seinem Ladeschieber abgesenkt unmittelbar oberhalb der ersten Stapellage befindlich ist. Auf diese Weise werden sämtliche Lagen des Gutstapels übereinander gestapelt.

Der auf diese Weise hergestellte Gutstapel wird nunmehr mit einer Folie umhüllt. Dazu nimmt die an dem Rahmen befestigte Reffeinrichtung die Schlauchhaube auf, die vorzugsweise durch eine an einem den Rahmen haltenden Gestell oberhalb des Rahmens montiert ist, um in an sich bekannter Weise schlauchförmiges Folienmaterial zuzuführen, abzulängen, oberseitig zu verschweißen und zu spreizen, so dass Refffinger der Reffeinrichtung unterseitig in die so gebildete Schlauchhaube eingreifen können. Diese wird dann in an sich bekannter Weise durch horizontales Auseinanderfahren der Refffinger umfänglich gedehnt. Der Rahmen bewegt sich danach in vertikaler Richtung entlang des Gutstapels, so dass dieser mit der zunächst von dem Rahmen gehaltenen Schlauchhaube umhüllt wird.

Als Rahmen im Sinne der Erfindung muss nicht notwendigerweise ein Gebilde angesehen werden, welches umfänglich geschlossen ist. Als Rahmen in diesem Sinne ist insbesondere ein Maschinengestell anzusehen, welches den beweglichen Ladeschieber in der Horizontalen beweglich hält und hinreichend versteift ist, um eine auf der Ablagefläche abgelegte Stapellage zu halten. Die zum Stapeln erforderliche vertikale Beweglichkeit des Rahmens wird genutzt, um auch den fertig gestapelten Gutstapel durch Verfahren des Rahmens entlang des Gutstapels zu umhüllen. Der nach dem Stapeln des Gutstapels ohnehin im oberen Bereich befindliche Rahmen wird dazu mit der Schlauchhaube bestückt, die danach auf der Reffeinrichtung gehalten ist. Ein neuerliches Bewegen des Rahmens entlang des Gutstapels führt schließlich zum Umhüllen desselben mit der Schlauchhaube.

Die erfindungsgemäße Vorrichtung erlaubt das Erstellen und Umhüllen des Gutstapels in einer einheitlichen Vorrichtung, wodurch der Investitionsaufwand zum automatisierten Herstellen von Verpackungseinheiten deutlich reduziert ist. Speziell wird die ohnehin vorhandene Führung des vertikal beweglichen Rahmens genutzt, um sowohl den Gutstapel auszubilden, als auch diesen zu umhüllen.

Gemäß einer bevorzugten Weiterbildung der vorliegenden Erfindung ist der Ladeschieber quer beweglich an dem besagten Gestell montiert, so dass der Ladeschieber von einer Beladungsstation des Rahmens, an der die Verpackungsgegenstände auf die Ablagefläche aufschiebbar sind, in eine Stapelposition; an der die Verpackungsgegenstände über einer Transportbahn ablegbar sind, hin- und her beweglich ist. Mit der Formulierung von Anspruch 2 soll zunächst zum Ausdruck gebracht werden, dass die Beladungsstation sowie die Transportbahn selbst nicht notwendigerweise Teil der Weiterbildung nach Anspruch 2 sind. Sie können indes Teil der Vorrichtung sein. In der Beladungsstation ist die Ablagefläche vorzugsweise derart vorgesehen, dass diese im Wesentlichen höhengleich zu einer Einlaufbahn vorgesehen ist, auf der eine zuvor gebildete Stapellage für den Gutstapel bereitgehalten wird, wobei ein Überschieber der Einlaufbahn zugeordnet ist, um die so bereitgehaltene Stapellage auf die Ablagefläche des Beladungsschiebers durch horizontales Verschieben zu überführen.

Nach Bilden der Stapellage und Ablegen derselben auf dem Ladeschieber wird der Rahmen danach in vertikaler Richtung verschoben und danach die Stapellage durch horizontales Verfahren des Ladeschiebers über die Transportbahn verbracht, auf der beispielsweise eine Palette zum Ablegen der Stapellage wartet. Bei einer platzsparenden Anordnung kann beispielsweise lediglich ein Ladeschieber vorgesehen sein, der an dem Rahmen in der Horizontalen beweglich ist. Die durch den Ladeschieber gebildete Ablagefläche kann aber auch fraktioniert gebildet sein durch mehrere Ladeschieberelemente, die relativ zueinander beweglich sind. So ist es beispielsweise denkbar, die Ladeschiebersegmente zum Ablegen der Stapellage auf dem Gutstapel in unterschiedliche Richtungen zu verfahren, um mittig eine Öffnung freizugeben, durch die die Stapellage auf dem Gutstapel abgelegt werden kann. Diese Beweglichkeit des Ladeschiebers erfolgt über Führungen, die identisch, jedenfalls aber üblicherweise parallel zu den Führungen des Rahmens vorgesehen sind, um diesen zwischen der Beladungsstation und der Stapelposition hin- und her zu bewegen. Vorzugsweise weist der Rahmen eine bewegliche Gegenfläche auf, die zum Einbringen der Stapellage über die Stapel in die Stapelposition wegbewegt werden kann, so dass die Stapellage ungehindert in die Stapelposition überführt werden kann, wohingegen die Gegenfläche in etwa bis auf die Ebene des Ladeschiebers abgesenkt ist, so dass die zunächst geringfügig mit der Ablagefläche bewegten Verpackungsgegenstände gegen die Gegenfläche stoßen und sich der Ladeschieber unterhalb der Stapellage wegziehen kann, so dass die Verpackungsgegenstände an der Stapelposition aus dem Rahmen fallen und stapelnd abgelegt werden können.

Gemäß einer bevorzugten Weiterbildung der vorliegenden Erfindung ist an dem Gestell eine zum Spreizen einer Folienbahn geeignete Spreizeinrichtung oberhalb des Rahmens ortsfest befestigt. Diese Spreizeinrichtung bildet den Abschluss einer Zuführstrecke von auf einer Rolle endlos bereitgestelltem schlauchförmigen Folienmaterial, die der Spreizeinrichtung vorgelagert Zuführmittel in Form von Umlenk- und Antriebsrollen, eine Schneideinrichtung zum Abschneiden eines vorbestimmten Längenstücks von dem Folienvorrat, und eine Schweißeinrichtung zum Verschließen des zugeführten Folienmaterials zur Ausbildung einer Schlauchhaube hat.

Nach Beendigung des Stapelvorgangs nimmt der Rahmen mit seiner Reffeinrichtung die an der Spreizeinrichtung bereit gehaltene Schlauchhaube auf. Es ist danach allerhöchstens ein geringer Verfahrweg erforderlich, um von der Lage des Rahmens nach Abschluss des Stapelns diesen Rahmen in eine Position zu bringen, in welcher dieser die Schlauchhaube oberhalb des Gutstapels in der Stapelposition erfasst. Nach Aufreffen der Schlauchhaube wird diese in an sich bekannter Weise (vgl. bspw. EP 1 013 549 A1 mit weiteren Nachweisen) über den Gutstapel gezogen (Haubenstretchen). Dabei ist jedoch zu erwähnen, dass die erfindungsgemäße Vorrichtung sich auch für das Aufschrumpfen von Folienmaterial eignet. Dabei wird die Vorrichtung genutzt, um den Gutstapel zu bilden und eine wärmeschrumpfbare Schlauchhaube zunächst den Gutstapel umhüllend anzuordnen, die danach unter Wärme aufgeschrumpft wird. Das Aufschrumpfen erfolgt aber üblicherweise in einer separaten Station. Es können allerdings auch Brenner an dem Rahmen vorgesehen sein, die die zum Schrumpfen erforderliche Wärme erzeugen.

Eine Schlauchhaube im Sinne der vorliegenden Erfindung muss nicht notwendigerweise ein oberseitig geschlossenes Gebilde sein. Bisweilen kommt es lediglich darauf an, den Gutstapel umfänglich zu fassen.

Gemäß einer weiteren bevorzugten Ausgestaltung der vorliegenden Erfindung umfasst die Vorrichtung einen Hubtisch, der bis auf die Höhe der Transportbahn absenkbar ist und in dieser abgesenkten Position die Transportbahn komplettiert und sich unterhalb des Rahmens in seiner Stapelposition befindet. Mit dem Hubtisch kann der fertig gestellte Gutstapel beim Überziehen der Schlauchhaube angehoben werden, so dass die von dem Rahmen übergezogene Schlauchhaube bis zu der untersteten Stapellage, gegebenenfalls auch bis unter die Palette eines Gutstapels übergezogen werden kann. Dabei ist zu beachten, dass sich die Refffinger regelmäßig im oberen Bereich des Rahmens befinden, so dass diese beim automatisierten Stapeln der Verpackungslagen nicht mit der Transportbahn oder dergleichen kollidieren können. Der Hubtisch sollte eine Höhenbeweglichkeit von wenigstens dem Höhenabstand zwischen dem Ladeschieber und den Refffingern des Rahmens haben.

Der Transporttisch komplettiert vorzugsweise die Rollenbahn und hat dementsprechend Rollen, auf denen die Verpackungseinheit auf dem Transportweg rollen kann. Ausgewählte, üblicherweise ortsfest vorgesehene Rollen, die Teil des Hubtisches sind, sind vorzugsweise als Antriebsrollen motorisch angetrieben.

Zur Lösung des verfahrensmäßigen Aspektes wird mit der vorliegenden Erfindung ein Verfahren zum Herstellen einer Verpackungseinheit, unter Verwendung einer Vorrichtung nach einem der Ansprüche 1 bis 7, angegeben, bei dem an einer Stapelposition der Gutstapel durch übereinanderlegen von Lagen an Verpackungsgegenständen gebilon der Gutstapel durch übereinanderlegen von Lagen an Verpackungsgegenständen gebildet wird und der so gebildete Gutstapel an der Stapelposition mit einer Schlauchhaube überzogen wird. Hierbei wird die Stapellage durch horizontales Verfahren des Ladeschiebers über den Gutstapel verbracht und danach auf dem Gutstapel abgelegt. Beide Verfahrensschritte, d.h. das Stapeln und das Überziehen erfolgen bei dem erfindungsgemäßen Verfahren automatisiert. Speziell verbleibt der gebildete Gutstapel nach dem Stapeln ortsfest bis zum Überziehen mit der Schlauchhaube. Allerhöchstens kann der Gutstapel beim Stapeln und/oder während des Überziehens in der Vertikalen bewegt werden. Eine horizontale Verlagerung des Gutstapels ist nicht erforderlich.

Die bevorzugten Weiterbildungen des erfindungsgemäßen Verfahrens sind bereits vorstehend angesprochen worden.

Eine besonders rasche und daher wirtschaftliche Verfahrensführung ergibt sich dadurch, dass der die Lagen bildende Rahmen nach dem Stapeln der Verpackungseinheit in einer oberhalb des Gutstapels gegebenen Überzieh-Ausgangsstellung eine Schlauchhaube aufnimmt. Diese Überzieh-Ausgangsstellung kann identisch mit denjenigen Stellungen des Rahmens sein, in der sich dieser beim Ablegen der letzten Lage auf dem Gutstapel befindet. Die Überzieh-Ausgangsposition kann gegenüber dieser höchsten Position des Rahmens beim Stapeln des Gutstapels auch leicht erhöht sein. Aus der Überzieh-Ausgangslage erfolgt lediglich ein Absenken des Rahmens über den Gutstapel, um die Schlauchhaube auf den Gutstapel überzuziehen. Mit anderen Worten wird der Rahmen zwischen dem Ablegen der letzten Stapellage und dem Überziehen der Schlauchhaube über den Gutstapel lediglich in vertikaler Richtung bewegt.

Bevorzugte Weiterbildungen des Verfahrens sind in den Ansprüchen 10 und 11 angegeben.

Die Erfindung wird nachfolgend unter Bezugnahme auf ein Ausführungsbeispiel in Verbindung mit der Zeichnung näher erläutert. In dieser zeigen:
- Figur 1: eine Seitenansicht auf ein Ausführungsbeispiel der Vorrichtung und
- Figur 2: eine Draufsicht auf das in Figur 1 gezeigte Ausführungsbeispiel.

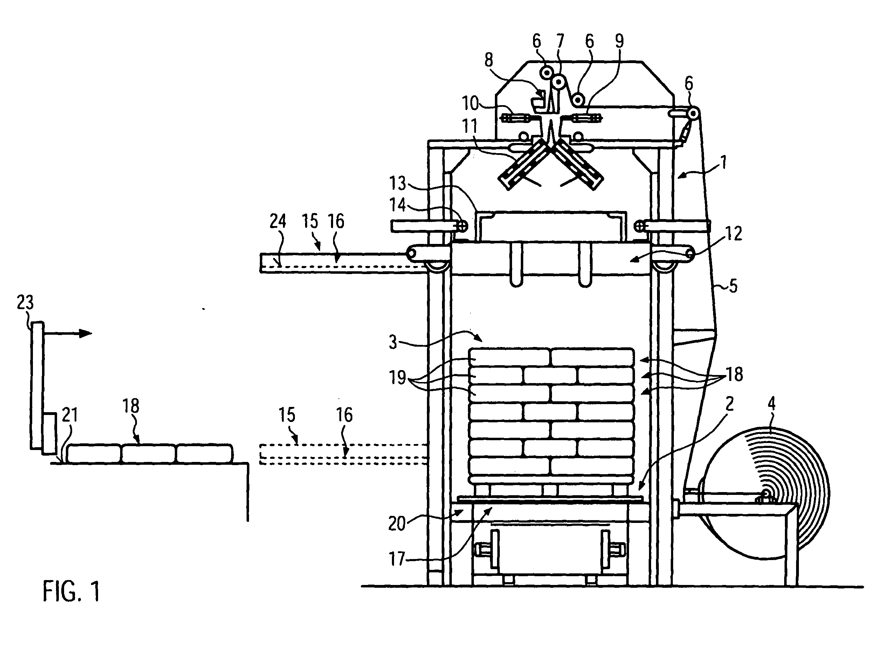

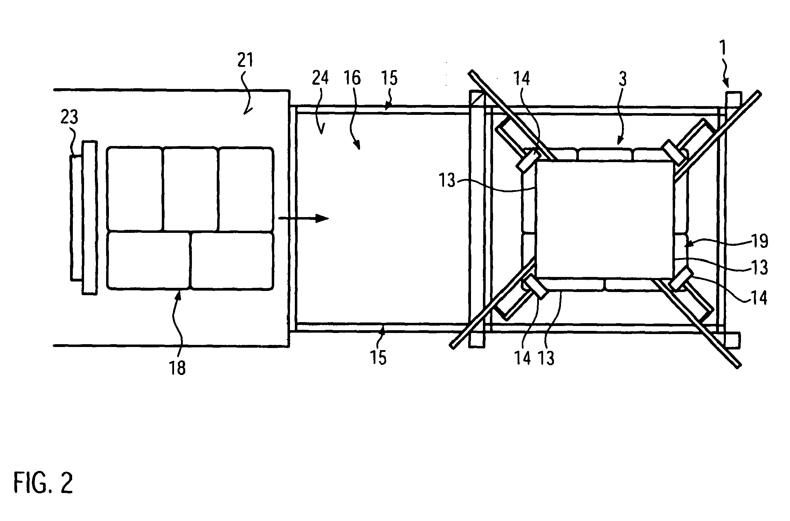

Das in den Figuren 1 und 2 gezeigte Ausführungsbeispiel umfasst ein Vorrichtungsgestell 1, zwischen dessen vertikalen Ständern eine Transportbahn 2 zum Zu- und Abfördern von Stückgutstapeln 3, die jeweils aus einer Mehrzahl von übereinander angeordneten Stückgutteilen gebildet sind, angeordnet ist. An dem Vorrichtungsgestell 1 ist eine Rolle 4 gelagert, die durch aufgewickelte Schlauchfolie 5 gebildet ist. Dabei sind die Seitenränder der Schlauchfolie 5 im aufgewickelten Zustand eingefaltet. Die Schlauchfolie 5 wird über Umlenkrollen 6 und Abzugsrollen 7 einer Einfädeleinrichtung zugeführt, die vertikal bewegliche Leitelemente 8 aufweist. Die Vorrichtung umfasst weiterhin eine Trenneinrichtung 9 sowie eine Schweißeinrichtung 10.

Unterhalb der Leitelemente 8 sind in bekannter Weise auf beiden Seiten des Vorrichtungsgestells 1 dachförmig verlaufende Doppelförderbänder 11 angeordnet, deren obere Aufnahmeenden unmittelbar unterhalb der Leitelemente 8 in deren vertikal abgesenkter Stellung befindlich sind. Anstelle der Doppelförderbänder kann auch eine andere Einrichtung zum Öffnen der Folie vorgesehen werden.

An den vier Ständern des Vorrichtungsgestells 1 ist ein vertikal beweglicher und an den Ständern vertikal geführter Rahmen 12 vorgesehen. Dieser trägt vier Spreizfinger 13 und den Spreizfingern 13 zugeordnete Reffrollen 14, die relativ zu den Spreizfingern 13 verfahrbar und an dem Rahmen 12 befestigt sind.

Unterhalb der Spreizfinger 13 und der Reffrollen 14 trägt der Rahmen 12 Führungsschienen 15, die das Vorrichtungsgestell 1 einseitig überragen. Über diese Führungsschienen 15 ist ein Ladeschieber 16 horizontal beweglich geführt, der von einer Position seitlich neben dem Vorrichtungsgestell 1, die im Folgenden als Beladungsposition bezeichnet wird, in eine Position verschiebbar ist, in der sich der Ladeschieber 16 innerhalb des Vorrichtungsgestells 1 befindet und die im Folgenden als Stapelposition bezeichnet werden soll. Der Ladeschieber 16 ist in den Führungsschienen 15 verschieblich geführt und darüber hinaus mit Antriebsmitteln versehen, um den Ladungsschieber 16 zwischen den beiden vorerwähnten Positionen hin- und herzuverfahren.

Im unteren Bereich weist das in den Figuren gezeigte Ausführungsbeispiel einen höhenbeweglichen Hubtisch 17 auf, der in seiner abgesenkten Position die Transportbahn 2 komplettiert. In der Zeichnung ist auf diesen Hubtisch 17 eine Palette mit einem darauf vorgesehenen Gutstapel gebildet aus übereinander geschichteten Stapellagen mit beispielsweise jeweils fünf Säcken 19 wiedergegeben. Der Hubtisch 17 weist Rollen 20 auf, von denen wenigstens eine Rolle angetrieben ist. Diese Rollen bilden eine Rollenbahn 20, die die Transportbahn 2 in der abgesenkten Position des Hubtisches 17 komplettiert.

Im untern Bereich der Vorrichtung ist weiterhin eine Einlaufbahn 21 gezeigt, die oberhalb eines Einlauftisches 22 vorgesehen und welcher ein Überschieber 23 zugeordnet ist. Der Überschieber 23 ist motorisch angetrieben und kann von einer nahe der vorderen Kante des Einlauftisches 22 befindlichen Position in eine davon entfernte zurückgezogene Position verfahren werden. Rechtwinklig zu der Erstreckungsrichtung des Einlauftisches 22 gemäß Figur 1 erstreckt sich eine Transportstrecke, der eine hier nicht gezeigte und an sich bekannte Einrichtung zum vorbestimmten Anordnen von Säcken 19 auf dem Transporttisch zugeordnet ist. Mit dieser Einrichtung können vereinzelt der Einrichtung zugeführte Säcke 19 quer zu der Transportrichtung verfahren sowie gedreht werden. Durch diese Einrichtung kann somit in der Ebene der Transportstrecke ein Verbund aus Säcken in vorbestimmter Anordnung erstellt werden. Diese vorbestimmte Anordnung von Säcken bildet die Stapellage 18 innerhalb des Gutstapels 3 aus.

Die vordere Kante des Einlauftisches 22 befindet sich in etwa auf Höhe des Ladeschiebers in der Beladungsposition. Durch Absenken des Rahmens 2 von der in Figur 1 gezeigten Höhenlage kann der Ladeschieber an der Beladungsstation derart angeordnet werden, dass eine durch den Ladeschieber 16 gebildete Ablagefläche 24 höhengleich mit der Ebene der Einlaufbahn 21 ist (vgl. Fig. 1 gestrichelte Kontur). In dieser Position wird eine zuvor auf der Einlaufbahn 21 gebildete Stapellage, d. h. eine vorbestimmte Anordnung von Säcken 19 in einer Ebene durch Betätigen des Überschiebers 23 auf die Ablagefläche 24 abgelegt. Der so bestückte Ladeschieber 16 wird danach durch Verfahren des Rahmens 12 relativ zu dem Vorrichtungsgestell 1 angehoben, und zwar so weit, dass der Rahmen 12 sich oberhalb des in Figur 1 gezeigten, noch nicht fertiggestellten Gutstapels 3 befindet. Der Rahmen wird nun abgesenkt bis der Ladeschieber 16 unmittelbar oberhalb der obersten Lage des Gutstapels vorgesehen ist. Nun wird der Ladeschieber 16 von der Stapelposition in die Beladungsposition verfahren, wobei bei dieser Bewegung an dem Rahmen 12 beweglich vorgesehene Rückhaltelemente die auf der Ablagefläche 24 abgelegte Stapellage in Position halten. Dementsprechend zieht sich der Ladungsschieber 16 unterhalb der Stapellage 18 weg. Diese legt sich auf den Gutstapel 3 ab.

Durch alternierendes Anfahren der Beladungsstation und Ablegen der dort aufgenommenen Stapellage 18 auf den Stückgutstapel 3 wird dieser fertiggestellt. Nach dem Stapeln der letzten Lage des Stückgutstapels 3 verfährt der Rahmen 12 in Richtung auf die Spreiz- bzw. Fördereinrichtung 11 für die Schlauchfolie 5 in eine Überzieh-Ausgangsstellung. Dort wird bei zusammengefahrenen Spreizfingern 13 Folienmaterial auf die Spreizfinger gefördert. Die Reffrollen 14 klemmen die Folie zwischen sich und den Spreizfingern 13 in an sich bekannter Weise (vgl. beispielsweise EP 1 013 549 A1). Eine zum Umhüllen des Gutstapels 3 notwendige Länge wird von dem Folienvorrat 4 abgewickelt. Die Folie wird oberseitig verschweißt und von der endlos zugeführten Folienbahn 2 abgeschnitten. Die Spreifinger 13 werden zusammen mit den Reffrollen 14 auseinandergefahren, um die Folie elastisch auf einen Umfang zu dehnen, der größer als der Umfang des Stückgutstapels 3 ist. Der Ladeschieber 16 bleibt dabei in der Beladungsposition, d. h. befindet sich seitlich neben dem Vorrichtungsgestell 1.

Durch Absenken des Rahmens 12 wird nunmehr die zuvor gebildete Schlauchhaube über den Gutstapel gezogen. Am Ende dieser Überziehbewegung ist die Schlauchhaube vollständig über den Gutstapel 3 einschließlich Palette gezogen.

Vor oder während der Überziehbewegung wird der Hubtisch 17 angehoben. Durch den Hubtisch ist es möglich, das Vorrichtungsgestell 1 relativ nahe an der Transportbahn 2 vorzusehen und den Rahmen 12 relativ eng um den Außenumfang des Gutstapels 3 anzuordnen, wodurch eine raumsparende Vorrichtung geschaffen ist, ohne dass die Gefahr besteht, dass im unteren Abschnitt der Überziehbewegung der Schlauchhaube über den Stückgutstapel 3 die in vertikaler Richtung beweglichen und an dem Rahmen 12 montierten Teile der Vorrichtung mit ortsfesten Anlagenteilen, speziell den im Bereich der Vorrichtung vorgesehenen Teilen der Transportbahn 2 kollidieren.

### Bezugszeichenliste

- 1: Vorrichtungsgestell
- 2: Transportbahn
- 3: Stückgutstapel
- 4: Rolle
- 5: Schlauchfolie
- 6: Umlenkrollen
- 7: Abzugsrollen
- 8: Leitelemente
- 9: Trenneinrichtung
- 10: Schweißeinrichtung
- 11: Doppelförderband (Spreizeinrichtung)
- 12: Rahmen
- 13: Spreizfinger
- 14: Reffrolle
- 15: Führungsschienen
- 16: Ladeschieber
- 17: Hubtisch
- 18: Stapellage
- 19: Säcke
- 20: Rollenbahn
- 21: Einlaufbahn
- 22: Einlauftisch
- 23: Überschieber
- 24: Ablagefläche

## Patentansprüche

1. Vorrichtung zum Herstellen einer mehrere zu einem Gutstapel (3) gestapelte Verpackungsgegenstände (19) umfassenden Verpackungseinheit, mit einer Einrichtung (10, 11, 13, 14) zum Umhüllen des Gutstapels (3) umfassend eine Reffeinrichtung (13, 14) zum Aufreffen und Überziehen einer Schlauchhaube über den Gutstapel (3), **gekennzeichnet durch**
einen die Reffeinrichtung (13, 14) haltenden Rahmen (12), an dem wenigstens ein beweglicher Ladeschieber (16) vorgesehen ist, **durch** den innerhalb des Rahmens (12) eine Ablagefläche (24) für Verpackungsgegenstände (19) geschaffen werden kann und der in eine Position seitlich neben den Gutstapel (3) bringbar ist.

2. Vorrichtung nach Anspruch 1, **dadurch gekennzeichnet, dass** der Ladeschieber (16) höhen- und querbeweglich an einem Gestell (1) montiert ist, so dass der Ladeschieber (16) von einer Beladungsstation, an der die Verpackungsgegenstände (19) auf die Ablagefläche (24) aufschiebbar sind, in eine Stapelposition, an der die Verpackungsgegenstände (19) über einer Transportbahn (2) ablegbar sind, hin- und herbeweglich ist.

3. Vorrichtung nach Anspruch 1 oder 2, **gekennzeichnet durch** eine zum Spreizen einer Folienbahn vorgesehene Spreizeinrichtung (11), die ortsfest über den Rahmen (12) an dem Gestell (1) befestigt ist.

4. Vorrichtung nach Anspruch 3, **dadurch gekennzeichnet, dass** die Spreizeinrichtung (11) an dem Gestell (1) über dem in seiner Stapelposition befindlichen Ladeschieber (16) vorgesehen ist.

5. Vorrichtung nach einem der vorherigen Ansprüche, **gekennzeichnet durch** einen auf Höhe der Transportbahn (2) absenkbaren Hubtisch (17), der in seiner abgesenkten Position die Transportbahn (2) komplettiert.

6. Vorrichtung nach Anspruch 5, **dadurch gekennzeichnet, dass** der Hubtisch (17) eine die Transportbahn (2) komplettierende Rollenbahn (20) aufweist.

7. Vorrichtung nach einem der vorherigen Ansprüche, **dadurch gekennzeichnet, dass** die Reffeinrichtung (13, 14) an einer dem Gutstapel (3) abgewandten Oberseite des Rahmens (12) vorgesehen ist.

8. Verfahren zum Herstellen einer mehrere zu einem Gutstapel (3) gestapelten Verpackungsgegenstände (19) umfassenden Verpackungseinheit unter Verwendung einer Vorrichtung nach einem der Ansprüche 1 bis 7, bei dem an einer Stapelposition der Gutstapel (3) durch Übereinanderlegen von Stapellagen (18) aus Verpackungsgegenständen (19) gebildet wird und der so gebildete Gutstapel (13) an der Stapelposition mit einer Schlauchhaube überzogen wird,
**dadurch gekennzeichnet,**
**dass** die Stapellage (18) durch horizontales Verfahren des Ladeschiebers (16) über den Gutstapel (3) verbracht wird und dass danach die Stapellage (18) auf dem Gutstapel (3) abgelegt wird.

9. Verfahren nach Anspruch 8, **dadurch gekennzeichnet, dass** der die Stapellagen (18) bildende Rahmen (12) nach dem Stapeln des Gutstapels (3) in einer oberhalb des Gutstapels (3) gegebenen Überzieh-Ausgangsstellung eine Schlauchhaube aufnimmt und diese danach durch Absenken des Rahmens (12) über den Gutstapel (3) überzieht.

10. Verfahren nach Anspruch 8 oder 9, **dadurch gekennzeichnet, dass** die Schlauchhaube in gereffter Form von dem Rahmen (12) aufgenommen wird.

11. Verfahren nach einem der Ansprüche 8 bis 10, **dadurch gekennzeichnet, dass** in einer Beladungsposition Verpackungsgegenstände (19) auf den Rahmen (12) in horizontaler Richtung aufgeschoben werden und dass die so auf den Rahmen (12) aufgebrachten Verpackungsgegenstände (19) an dem Rahmen (12) in die Stapelposition bewegt werden.

## Claims

1. Device for producing a packaging unit comprising a plurality of items (19) to be packaged which are stacked to form a stack (3) of goods, comprising a means (10, 11, 13, 14) for wrapping the stack (3) of goods which comprises a reefing means (13, 14) for reefing and drawing a tubular hood over the stack (3) of goods, **characterised by** a frame (12) which holds the reefing means (13, 14), on which frame at least one movable loading slider (16) is provided, by means of which a depositing surface (24) for items (19) to be packaged can be provided inside the frame (12), and which slider can be brought into a position beside the stack (3) of goods.

2. Device according to claim 1, **characterised in that** the loading slider (16) is mounted on a rack (1) in a vertically and transversely movable manner, such that the loading slider (16) can be moved back and forth from a loading station, at which the items (19) to be packaged can be slid onto the depositing surface (24), into a stacked position, in which the items (19) to be packaged can be placed via a transport conveyor (2).

3. Device according to either claim 1 or claim 2, **characterised by** a spreading means (11) for spreading a film web, which means is fixedly attached to the rack (1) via the frame (12).

4. Device according to claim 3, **characterised in that** the spreading means (11) is provided on the rack (1) above the loading slider (16) which is positioned in the stacked position thereof.

5. Device according to any of the preceding claims, **characterised by** a lifting table (17) which can be lowered to the height of the transport conveyor (2) and completes the transport conveyor (2) in its lowered position.

6. Device according to claim 5, **characterised in that** the lifting table (17) comprises a roller conveyor (20) which completes the transport conveyor (2).

7. Device according to any of the preceding claims, **characterised in that** the reefing means (13, 14) is provided on an upper surface, facing away from the stack (3) of goods, of the frame (12).

8. Method for producing a packaging unit comprising a plurality of items (19) to be packaged which are stacked to form a stack (3) of goods using a device according to any of claims 1 to 7, in which, in a stacked position, the stack (3) of goods is formed by superposing stack layers (18) made up of items (19) to be packaged and the stack (13) of goods thus formed is covered with a tubular hood in the stacked position, **characterised in that** the stack layer (18) is brought above the stack (3) of goods by horizontally displacing the loading slider (16), and **in that** the stack layer (18) is then placed on the stack (3) of goods.

9. Method according to claim 8, **characterised in that** the frame (12) forming the stack layers (18) receives a tubular hood in a given covering starting position above the stack (3) of goods after stacking the stack (3) of goods, and said tubular hood is drawn over the stack (3) of goods by lowering the frame (12).

10. Method according to either claim 8 or claim 9, **characterised in that** the tubular hood is received by the frame (12) in a reefed form.

11. Method according to any of claims 8 to 10, **characterised in that**, in a loading position, items (19) to be packaged are slid onto the frame (12) in a horizontal direction, and **in that** the items (19) to be packaged which are thus deposited on the frame (12) are moved on the frame (12) in the stacked position.

## Revendications

1. Dispositif de fabrication d'une unité d'emballage comportant une pluralité d'objets d'emballage (19) empilés pour former une pile d'articles (3), avec un dispositif (10, 11, 13, 14) pour envelopper la pile d'articles (3) comprenant un dispositif enrouleur (13, 14) pour enrouler et déployer une housse tubulaire sur la pile d'articles (3), **caractérisé par**
un cadre (12) supportant le dispositif enrouleur (13, 14) sur lequel au moins un tiroir de chargement mobile (16) est pourvu, qui permet de procurer une surface de support (24) dans le cadre (12) pour des objets d'emballage (19) et qui peut être amené en position latérale près de la pile d'articles (3).

2. Dispositif selon la revendication 1, **caractérisé en ce que** le tiroir de chargement (16) est monté de façon mobile en hauteur et transversalement dans un châssis (1), de telle sorte que le tiroir de chargement (16) peut être déplacé alternativement entre une station de chargement dans laquelle les objets d'emballage (19) peuvent être glissés sur la surface de support (24) et une position d'empilement dans laquelle les objets d'emballage (19) peuvent être déposés sur un convoyeur (2).

3. Dispositif selon la revendication 1 ou 2, **caractérisé par** un dispositif d'écartement (11) pourvu pour écarter une bande de film, qui est fixé de façon inamovible sur le cadre (12) dans le châssis (1).

4. Dispositif selon la revendication 3, **caractérisé en ce que** le dispositif d'écartement (11) est pourvu sur le châssis (1) au-dessus du tiroir de chargement (16) se trouvant dans sa position d'empilement.

5. Dispositif selon l'une des revendications précédentes, **caractérisé par** une table de levage (17) qui peut être abaissée à hauteur du convoyeur (2) et complète le convoyeur (2) dans sa position abaissée.

6. Dispositif selon la revendication 5, **caractérisé en ce que** la table de levage (17) comporte un convoyeur à rouleaux (20) qui complète le convoyeur (2).

7. Dispositif selon l'une des revendications précédentes, **caractérisé en ce que** le dispositif enrouleur (13, 14) est pourvu sur un côté supérieur du cadre (12) opposé à la pile d'articles (3).

8. Procédé de fabrication d'une unité d'emballage comportant une pluralité d'objets d'emballage (19) empilés pour former une pile d'articles (3) en utilisant un dispositif selon l'une des revendications 1 à 7, dans lequel la pile d'articles (3) est constituée par la superposition de couches d'empilement (18) d'objets à emballer (19) dans une position d'empilement, et la pile d'articles (13) ainsi constituée est recouverte dans la position d'empilement à l'aide d'une housse tubulaire,
**caractérisé**
**en ce que** la couche d'empilement (18) est placée au-dessus de la pile d'articles (3) par un déplacement horizontal du tiroir de chargement (16), et en ce que la couche d'empilement (18) est ensuite déposée sur la pile d'articles (3).

9. Procédé selon la revendication 8, **caractérisé en ce que** le cadre (12) qui constitue les couches d'empilement (18) saisit une housse tubulaire après l'empilement de la pile d'articles (3) dans une position de départ de recouvrement donnée au-dessus de la pile d'articles (3) et déploie ensuite ladite housse en abaissant le cadre (12) sur la pile d'articles (3).

10. Procédé selon la revendication 8 ou 9, **caractérisé en ce que** la housse tubulaire est saisie du cadre (12) sous forme enroulée.

11. Procédé selon l'une des revendications 8 à 10, **caractérisé en ce que** des objets d'emballage (19) sont glissés sur le cadre (12) en direction horizontale dans une position de chargement et **en ce que** les objets d'emballage (19) ainsi placés sur le cadre (12) sont déplacés sur le cadre (12) dans la position d'empilement.
